# EUROPEAN PATENT SPECIFICATION

(11) **EP 2 066 897 B1**
(45) Date of publication and mention of the grant of the patent: **24.02.2010**
(21) Application number: 07848795.6
(22) Date of filing: 27.09.2007
(51) Int. Cl.: F02M 25/07

(54) **EGR SYSTEM FOR INTERNAL COMBUSTION ENGINE AND METHOD FOR CONTROLLING THE SAME**
AGR-SYSTEM FÜR EINEN VERBRENNUNGSMOTOR UND VERFAHREN ZU SEINER STEUERUNG
SYSTÈME DE RECIRCULATION DES GAZ D'ÉCHAPPEMENT POUR UN MOTEUR À COMBUSTION INTERNE, ET SON PROCÉDÉ DE CONTRÔLE

(30) Priority: 29.09.2006 JP 2006268648
(43) Date of publication of application: 10.06.2009
(73) Proprietor: Toyota Jidosha Kabushiki Kaisha, Toyota-shi, Aichi-ken 471-8571 (JP)
(72) Inventor: SHIMIZU, Hajime, Aichi-ken 471-8571 (JP); NAGAE, Masahiro, Aichi-ken 471-8571 (JP); HAGA, Hiroyuki, Aichi-ken 471-8571 (JP)
(74) Representative: Intes, Didier Gérard André
(86) International application number: PCT/IB2007/002698
(87) International publication number: WO 2008/038083

(56) References cited:
- EP-A- 1 420 159
- JP-A- 2002 021 625
- JP-A- 2004 156 572
- JP-A- 2005 127 247
- US-A1- 2004 050 375

## Description

### BACKGROUND OF THE INVENTION

### 1. Field of the Invention

The invention relates to an EGR system for an internal combustion engine, and a method for controlling the same.

### 2. Description of the Related Art

There is a technology for reducing the amount of nitrogen oxide (NOx) that is generated when fuel is burned in an internal combustion engine. According to the technology, communication is provided between an exhaust passage and an intake passage, whereby a portion of the exhaust gas is recirculated back to the internal combustion engine (i.e., exhaust gas recirculation (hereinafter, referred to as "EGR") is performed).

In recent years, (see for example US 2004/0050375 A1) a technology for making it possible to perform EGR in a broader operating range of an internal combustion engine has been suggested. According to the technology, a high-pressure EGR unit and a low-pressure EGR unit are provided, and EGR is performed while changing the EGR unit used for EGR between the high-pressure EGR unit and the low-pressure EGR unit or using both the high-pressure EGR unit and the low-pressure EGR unit in combination, based on the operating state of the internal combustion engine. The high-pressure EGR unit recirculates a portion of the exhaust gas back to the internal combustion engine through a high-pressure EGR passage that provides communication between an exhaust passage, at a portion upstream of a turbine of a turbocharger, and an intake passage, at a portion downstream of a compressor of the turbocharger. The low-pressure EGR unit recirculates a portion of the exhaust gas back to the internal combustion engine through a low-pressure EGR passage that provides communication between the exhaust passage, at a portion downstream of the turbine, and the intake passage, at a portion upstream of the compressor.

For example, Japanese Patent Application Publication No. JP-2002-021625 (JP-A-2002-021625) describes an EGR system that performs EGR using a high-pressure EGR unit when an internal combustion engine is operated at no load or low load. When the internal combustion engine is operated at medium load or high load, the EGR system performs EGR using a low-pressure EGR unit. Japanese Patent Application Publication No. JP-2000-130218 (JP-A-2000-130218) describes a technology for reducing the EGR rate when an engine is being warmed up.

A high-pressure EGR passage is formed of, for example, a passage that provides direct communication between an exhaust manifold and an intake manifold. Accordingly, the flow channel (the high-pressure EGR channel), through which the exhaust gas discharged from an internal combustion engine is recirculated back to the internal combustion engine via the high-pressure EGR passage, is relatively short. In addition, only a small number of engine components such as a flow rate regulating valve for the high-pressure EGR gas and an EGR cooler are arranged in the high-pressure EGR channel. Therefore, the temperature of the high-pressure EGR gas changes relatively quickly in response to a change in the temperature of the exhaust gas discharged from the internal combustion engine.

In contrast, in the flow channel (the low-pressure EGR channel) through which the exhaust gas discharged from the internal combustion engine is recirculated back to the internal combustion engine via a low-pressure EGR passage, there are usually arranged various engine components such as a turbine, an exhaust gas control catalyst, an EGR cooler for the low-pressure EGR gas, a flow rate regulating valve for the low-pressure EGR gas, a compressor, and an intercooler. In addition, the low-pressure EGR channel is much longer than the high-pressure EGR channel. Therefore, when the temperature of the exhaust gas discharged from the internal combustion engine changes, a change in the temperature of the exhaust gas is moderated due to the heat capacities of the engine components arranged in the low-pressure EGR channel while the exhaust gas flows through the low-pressure EGR channel. Accordingly, the response of the temperature of the low-pressure EGR gas to a change in the temperature of the exhaust gas discharged from the internal combustion engine tends to be slower than that of the high-pressure EGR gas.

For example, when the internal combustion engine is in the transitional state to the high-load operating state from the low-load operating state, for example, the idling state, or the no-load operating state, for example, the speed-reduction state in which fuel supply is cut off, the internal combustion engine starts shifting to the high-load operating state when the temperatures of the internal combustion engine and the engine components are low. In this case, the temperature of the high-pressure EGR gas increases relatively quickly as the temperature of the exhaust gas increases due to a change in the operating state of the internal combustion engine. In contrast, the temperature of the low-pressure EGR gas tends to be kept low for a while in the early stage of the transition to the high-speed operation. This is because the exhaust gas, which has a high temperature immediately after being discharged from the internal combustion engine, is cooled by the low-temperature engine components arranged in the low-pressure EGR channel while flowing through the low-pressure EGR channel.

In the EGR system described in JP-A-2002-021625, control is executed such that EGR is performed using the low-pressure EGR unit when the internal combustion engine is operated at medium load or high load. Accordingly, when the internal combustion engine shifts to the high-load operating state due to an increase in its rotational speed, the low-pressure EGR gas, which has a temperature lower than that of when the internal combustion engine is normally operated at medium load or high load, is recirculated back to the internal combustion engine for a while. This excessively decreases the intake air temperature, which may cause incomplete combustion, for example, a misfire.

### SUMMARY OF THE INVENTION

The invention provides a technology for an EGR system for an internal combustion engine, which selectively uses a high-pressure EGR unit and a low-pressure EGR unit, the technology suppressing occurrence of incomplete combustion, for example, a misfire that is caused if low-pressure EGR gas having a low temperature is recirculated back to the internal combustion engine.

An aspect of the invention relates to an EGR system for an internal combustion engine. The EGR system includes a turbocharger, a high-pressure EGR unit, a low-pressure EGR unit, and an EGR control unit. The turbocharger has a compressor in an intake passage of the internal combustion engine, and has a turbine in an exhaust passage of the internal combustion engine. The high-pressure EGR unit recirculates a portion of exhaust gas back to the internal combustion engine through a high-pressure EGR passage that provides communication between the exhaust passage, at a portion upstream of the turbine, and the intake passage, at a portion downstream of the compressor. The low-pressure EGR unit recirculates a portion of the exhaust gas back to the internal combustion engine through a low-pressure EGR passage that provides communication between the exhaust passage, at a portion downstream of the turbine, and the intake passage, at a portion upstream of the compressor. The EGR control unit controls the high-pressure EGR unit and the low-pressure EGR unit such that the high-pressure EGR gas amount, which is the amount of high-pressure EGR gas recirculated back to the internal combustion engine by the high-pressure EGR unit, and the low-pressure EGR gas amount, which is the amount of low-pressure EGR gas recirculated back to the internal combustion engine by the low-pressure EGR unit, match the prescribed high pressure EGR gas amount and the prescribed low-pressure EGR gas amount, respectively, based on the operating state of the internal combustion engine. The EGR control unit increases the ratio of the high-pressure EGR gas amount to the low-pressure EGR gas amount, when the internal combustion engine is in the transitional state from the low-load operating state to the high-load operating state. The ratio of the high-pressure EGR gas amount to the low-pressure EGR gas amount may be increased by making the high-pressure EGR gas amount larger than the prescribed high-pressure EGR gas amount Alternatively, the ratio of the high-pressure EGR gas amount to the low-pressure EGR gas amount may be increased by making the low-pressure EGR gas amount smaller than the prescribed low-pressure EGR gas amount.

The prescribed high-pressure EGR gas amount and the prescribed low-pressure EGR gas amount are the base amount of the high-pressure EGR gas and the base amount of the low-pressure EGR gas, respectively. The prescribed high-pressure EGR gas amount and the prescribed low-pressure EGR gas amount are empirically determined in advance based on the operating state of the internal combustion engine such that EGR is appropriately performed in order to improve the exhaust characteristics, for example, by reducing the amount of NOx and suppressing generation of smoke, to appropriately control fuel combustion, etc.

The low-load operating state includes the idling state, the no-load operating state, that is, for example, the speed-reduction state in which fuel supply is cut off, etc. The high-load operating state is the operating state in which the engine torque and the engine speed higher than those in the low-load operating state are achieved, and the prescribed amount of the low-pressure EGR gas (the base low-pressure EGR gas amount) recirculated back to the internal combustion engine by the low-load EGR unit, which is determined based on the operating state of the internal combustion engine, is not zero. More specifically, the high-load operating state includes the operating state in the operating range (range MIX) in which EGR is performed by the EGR control unit using both the low-pressure EGR unit and the high-pressure EGR unit, and the operating state in the operating range (range LPL) in which EGR is performed using the low-pressure EGR unit.

As described above, when the internal combustion engine is in the transitional state from the low-load operating state to the high-load operating state, the temperature of the high-pressure EGR gas changes to the high-pressure EGR gas temperature, which is estimated to be achieved when the internal combustion engine is normally operated at high load, in a relatively short time. In contrast, the low-pressure EGR gas temperature is kept low for a while in the early stage of the transition from the low-load operating state to the high-load operating state. The time required for the low-pressure EGR gas temperature to change to the low-pressure EGR gas temperature, which is estimated to be achieved when the internal combustion engine is normally operated at high load, is longer than the time required for the high-pressure EGR gas temperature to change to the high-pressure EGR gas temperature, which is estimated to be achieved when the internal combustion engine is normally operated at high load.

Accordingly, if the base (prescribed) amount of the low-pressure EGR gas, which corresponds to the high-load operating state, is recirculated back to the internal combustion engine, the low-pressure EGR gas having a temperature lower than estimated is recirculated back to the internal combustion engine. As a result, the temperature of the intake air excessively decreases, which may cause incomplete combustion, for example, a misfire.

In contrast, with the configuration described above, the high-pressure EGR gas amount is made larger than the base high-pressure EGR gas amount, when the internal combustion engine is in the transitional state from the low-load operating state to the high-load operating state. In this way, a larger amount of high-pressure EGR gas, of which the temperature has been increased to the value that is estimated to be achieved when the internal combustion engine is normally operating at high load, is recirculated back to the internal combustion engine. Accordingly, an excessive decrease in the intake air temperature is suppressed, and therefore occurrence of incomplete combustion, for example, a misfire is suppressed.

The EGR system according to the aspect of the invention described above may further include a combustion state detection unit that detects the fuel combustion state in the internal combustion engine. The ratio of the high-pressure EGR gas amount to the low-pressure EGR gas amount may be increased, if incomplete fuel combustion is detected by the combustion state detection unit when the internal combustion engine is in the transitional state from the low-load operating state to the high-load operating state.

In this specification, incomplete fuel combustion means the state in which the fuel is not appropriately burned and a misfire has occurred or the state in which there is a sign of a misfire. For example, a sensor that detects the cylinder pressure may be provided, the combustion pressure may be estimated based on the detected cylinder pressure, and the fuel combustion state may be detected based on the manner in which the combustion pressure changes with time.

With the configuration described above, even when the internal combustion engine is the transitional state from the low-load operating state to the high-load operating state, the high-pressure EGR gas amount is not increased until incomplete combustion actually occurs in the internal combustion engine or a sign of incomplete combustion is detected. Thus, it is possible to suppress deterioration of the exhaust characteristics, for example, an increase in the amount of smoke due to an increase in the EGR rate, which is caused by increasing the high-pressure EGR gas amount.

Not only an excessive decrease in the intake air temperature but also various factors may cause incomplete fuel combustion in the internal combustion engine (for example, a low oxygen concentration). According to the configuration described above, when incomplete combustion is detected, the intake air temperature is increased by increasing the high-pressure EGR gas amount in order to eliminate the incomplete combustion. However, if the detected incomplete combustion is due to a factor other than an excessive decrease in the intake air temperature, there is a possibility that increasing the high-pressure EGR gas amount does not eliminate the incomplete combustion.

Accordingly, in the configuration described above, the high-pressure EGR gas amount may be increased, only when it is determined that the detected incomplete combustion is due to an excessive decrease in the intake air temperature.

The intake air temperature is excessively decreased by recirculating the low-pressure EGR gas, having a temperature lower than the temperature that is estimated based on the operating state of the internal combustion engine, back to the internal combustion engine. Accordingly, it is possible to determine the factor that has caused the incomplete combustion by determining whether the low-pressure EGR gas temperature is lower than the temperature that is estimated based on the operating state of the internal combustion engine.

When an exhaust gas catalyst is provided upstream of a position at which the low-pressure EGR passage is connected to the exhaust passage, the low-pressure EGR gas is a portion of the exhaust gas flowing out of the exhaust gas catalyst. Accordingly, it is considered that the temperature of the exhaust catalyst has a strong correlation with the low-pressure EGR gas temperature. Accordingly, it is possible to determine, based on the temperature of the exhaust gas catalyst, whether the low-pressure EGR gas temperature is lower than the temperature estimated based on the operating state of the internal combustion engine.

The EGR system according to the aspect of the invention described above may further include a catalyst temperature detection unit that estimates or detects (hereinafter, estimating or detecting the temperature of the exhaust gas catalyst will be collectively referred to as "detecting the temperature of the exhaust gas catalyst") the temperature of the exhaust gas catalyst which is provided upstream of a portion at which the low-pressure EGR passage is connected to the exhaust passage. The ratio of the high-pressure EGR gas amount to the low-pressure EGR gas amount may be increased, if incomplete fuel combustion is detected by the combustion state detection unit and the temperature of the exhaust gas catalyst estimated or detected by the catalyst temperature detection unit is lower than the predetermined temperature, when the internal combustion engine is in the transitional state from the low-load operating state to the high-load operating state.

The predetermined temperature is the temperature of the exhaust gas catalyst, which is used to determine (or estimate) whether the low-pressure EGR gas temperature falls below the low-pressure EGR gas temperature, which is estimated to be achieved when the internal combustion engine is normally operated at high load. The predetermined temperature is empirically determined in advance.

Thus, the high-pressure EGR gas amount is increased only when incomplete combustion has occurred due to an excessive decrease in the intake air temperature. Accordingly, it is possible to more reliably suppress occurrence of incomplete combustion, for example, a misfire that is caused by recirculating the low-pressure EGR gas having a low temperature back to the internal combustion engine.

Another aspect of the invention relates to a method for controlling an EGR system for an internal combustion engine, the EGR system including a turbocharger that has a compressor in an intake passage of the internal combustion engine, and that has a turbine in an exhaust passage of the internal combustion engine. According to the method, a portion of exhaust gas is recirculated back to the internal combustion engine through a high-pressure EGR passage that provides communication between the exhaust passage, at a portion upstream of the turbine, and the intake passage, at a portion downstream of the compressor. A portion of the exhaust gas is recirculated back to the internal combustion engine through a low-pressure EGR passage that provides communication between the exhaust passage, at a portion downstream of the turbine, and the intake passage, at a portion upstream of the compressor. A control is executed such that the high-pressure EGR gas amount which is the amount of high-pressure EGR gas recirculated back to the internal combustion engine and the low-pressure EGR gas amount which is the amount of low-pressure EGR gas recirculated back to the internal combustion engine match the prescribed high-pressure EGR gas amount and the prescribed low-pressure EGR gas amount, respectively, based on the operating state of the internal combustion engine. The ratio of the high-pressure EGR gas amount to the low-pressure EGR gas amount is increased, when the internal combustion engine is in the transitional state from the low-load operating state to the high-load operating state.

According to the aspects of the invention described above, it is possible to provide the technology for the EGR system for an internal combustion engine, which selectively uses the high-pressure EGR unit and the low-pressure EGR unit, the technology suppressing occurrence of incomplete combustion, for example, a misfire that is caused if low-pressure EGR gas having a low temperature is recirculated back to the internal combustion engine.

### BRIEF DESCRIPTION OF THE DRAWINGS

The foregoing and further objects, features and advantages of the invention will become apparent from the following description of an example embodiment with reference to the accompanying drawings, wherein the same or corresponding portions will be denoted by the same reference numerals and wherein:
FIG. 1 is a view schematically showing the structure of an internal combustion engine provided with an EGR system according to an embodiment of the invention, and an intake system and an exhaust system of the internal combustion engine;
FIG. 2 is a graph showing the manner in which the EGR unit used for EGR is selected from among a high-pressure EGR unit and a low-pressure EGR unit in the EGR system according to the embodiment of the invention; and
FIG. 3 is a flowchart showing the routine for increasing the amount of high-pressure EGR gas according to the embodiment of the invention.

### DETAILED DESCRIPTION OF THE EMBODIMENT

Hereafter, an example embodiment of the invention will be described in detail with reference to the accompanying drawings. Unless otherwise noted, the sizes, materials, shapes, relative arrangements, etc. of the components described in the embodiment do not limit the technical scope of the invention.

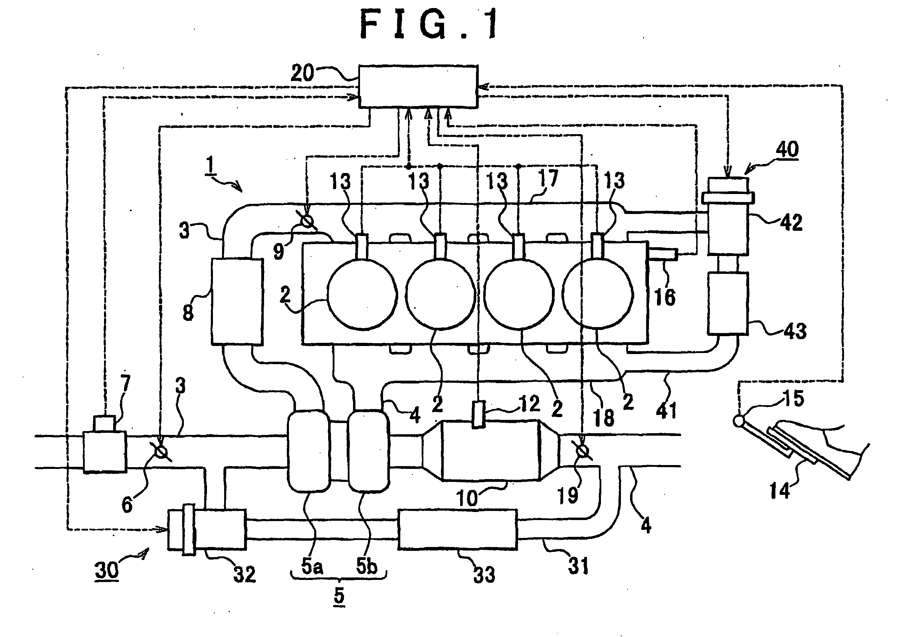

FIG 1 is a view schematically showing an internal combustion engine provided with an EGR system according to the embodiment of the invention, and an intake system and an exhaust system of the internal combustion engine. An internal combustion engine 1 shown in FIG 1 is a water-cooled four-cycle diesel engine having four cylinders 2.

An intake manifold 17 and an exhaust manifold 18 are connected to the cylinders 2 of the internal combustion engine 1. An exhaust pipe 4 is connected to the intake manifold 17. A second intake throttle valve 9 that regulates the flow rate of the intake air flowing through the intake pipe 3 is provided near the portion at which the intake manifold 17 and the intake pipe 3 are connected to each other. The second intake throttle valve 9 is opened/closed by an electric actuator. An intercooler 8 that promotes heat exchange between the intake air and the outside air to cool the intake air is provided in the intake pipe 3, at a position upstream of the second intake throttle valve 9. A compressor housing 5a of a turbocharger 5 that operates using the energy of the exhaust gas as a driving source is provided in the intake pipe 3, at a position upstream of the intercooler 8. A first intake throttle valve 6 that regulates the flow rate of the intake air flowing through the intake pipe 3 is provided in the intake pipe 3, at a position upstream of the compressor housing 5a. The first intake throttle valve 6 is opened/closed by an electric actuator. An airflow meter 7 that outputs an electric signal indicating the flow rate of the air flowing into the intake pipe 3 is provided in the intake pipe 3, at a position upstream of the first intake throttle valve 6. The airflow meter 7 detects the intake air amount.

An exhaust pipe 4 is connected to the exhaust manifold 18. A turbine housing 5b of the turbocharger 5 is provided in a middle portion of the exhaust pipe 4. An exhaust gas control apparatus 10 is provided in the exhaust pipe 4, at a position downstream of the turbine housing 5b. The exhaust gas control apparatus 10 includes an oxidation catalyst and a particulate filter (hereinafter, referred to as a "filter") that is arranged downstream of the oxidation catalyst. The filter supports a NOx storage reduction catalyst (hereinafter, referred to as a "NOx catalyst"). An exhaust throttle valve 19 that regulates the flow rate of the exhaust gas flowing through the exhaust pipe 4 is provided in the exhaust pipe 4, at a position downstream of the exhaust gas control apparatus 10. The exhaust gas throttle valve 19 is opened/closed by an electric actuator.

The internal combustion engine 1 is provided with a low-pressure EGR unit 30 that introduces a portion of the exhaust gas flowing through the exhaust pipe 4 to the intake pipe 3 at low pressure to recirculate it back to the cylinders 2. The low-pressure EGR unit 30 includes a low-pressure EGR passage 31, a low-pressure EGR valve 32 and a low-pressure EGR cooler 33.

The low-pressure EGR passage 31 provides communication between the exhaust pipe 4, at a portion downstream of the exhaust gas throttle valve 19, and the intake pipe 3, at a portion upstream of the compressor housing 5a and downstream of the first intake throttle valve 6. The exhaust gas is introduced to the intake pipe 3 at low pressure through the low-pressure EGR passage 31. In the embodiment of the invention, the exhaust gas that is recirculated back to the cylinders 2 through the low-pressure EGR passage 31 is referred to as the low-pressure EGR gas.

The low-pressure EGR valve 32 is a flow rate regulating valve that regulates the amount of exhaust gas flowing through the low-pressure EGR passage 31 by changing the flow passage area of the low-pressure EGR passage 31. The amount of low-pressure EGR gas is regulated by adjusting the opening amount of low-pressure EGR valve 32. The amount of low-pressure EGR gas may be regulated by a method other than adjustment of the opening amount of low-pressure EGR valve 32. For example, the amount of low-pressure EGR gas may be regulated in a method in which the pressure difference between the upstream side and the downstream side of the low-pressure EGR passage 31 is changed by adjusting the opening amount of first intake throttle valve 6.

The low-pressure EGR cooler 33 promotes heat exchange between the low-pressure EGR gas flowing through the low-pressure EGR cooler 33 and the coolant that cools the internal combustion engine 1 to cool the low-pressure EGR gas.

The internal combustion engine 1 is provided with a high-pressure EGR unit 40 that introduces a portion of the exhaust gas flowing through the exhaust pipe 4 at high pressure to recirculate it back to the cylinders 2 The high-pressure EGR unit 40 includes a high-pressure EGR passage 41, a high-pressure EGR valve 42 and a high pressure EGR cooler 43.

The high-pressure EGR passage 41 provides communication between the exhaust manifold 18 and the intake manifold 17. The exhaust gas is introduced to the intake pipe 3 at high pressure through the high-pressure EGR passage 41. In the embodiment of the invention, the exhaust gas that is recirculated back to the cylinders through the high-pressure EGR passage 41 is referred to as the high-pressure EGR gas.

The high-pressure EGR valve 42 is a flow rate regulating valve that regulates the amount of exhaust gas flowing through the high-pressure EGR passage 41 by changing the flow passage area of the high-pressure EGR passage 41. The amount of high-pressure EGR gas is regulated by adjusting the opening amount of high-pressure EGR valve 42. The amount of high-pressure EGR gas may be regulated by a method other than adjustment of the opening amount of high-pressure EGR valve 42. For example, the amount of high-pressure EGR gas may be regulated in a method in which the pressure difference between the upstream side and the downstream side of the high-pressure EGR passage 41 is changed by adjusting the opening amount of second intake throttle valve 9. When a variable capacity-type turbocharger is used as the turbocharger 5, the amount of high-pressure EGR gas may be regulated by adjusting the opening amount of a nozzle vane that changes the manner in which the exhaust gas flows through the turbine.

The high-pressure EGR cooler 43 promotes heat exchange between the high-pressure EGR gas flowing through the high-pressure EGR cooler 43 and the coolant that cools the internal combustion engine 1 to cool the high-pressure EGR gas.

The internal combustion engine 1 is provided with a crank position sensor 16 that detects the crank angle and the rotational speed of the internal combustion engine 1, an accelerator pedal operation amount sensor 15 that outputs an electric signal indicating the amount by which a driver depresses an accelerator pedal 14, and that detects the load on the internal combustion engine 1, the airflow meter 7 that detects the flow rate of the air flowing into the intake pipe 3, a temperature sensor 12 that detects the temperature of the exhaust gas control apparatus 10, and cylinder pressure sensors 13 that detect the pressure in the respective cylinders 2. Although not shown in the figure or described in this specification, various sensors that are usually provided to a common diesel engine are provided to the internal combustion engine 1.

The thus structured internal combustion engine 1 is provided with an ECU 20 that is a computer which controls the internal combustion engine 1. The above-mentioned various sensors are connected to the ECU 20 via electric wiring, and output signals from the various sensors are transmitted to the ECU 20. Various components such as the low-pressure EGR valve 32, the high-pressure EGR valve 42, the first intake air throttle valve 6, the second intake air throttle valve 9 and the exhaust gas throttle valve 19 are connected to the ECU 20 via electric wiring. These components are controlled based on control command signals transmitted from the ECU 20.

Hereafter, exhaust gas recirculation (EGR) performed using the low-pressure EGR unit 30 and the high-pressure EGR unit 40 according to the embodiment of the invention will be described. The engine operating condition under which EGR is appropriately performed using the low-pressure EGR unit 30 and the engine operating condition under which EGR is appropriately performed using the high-pressure EGR unit 40 are empirically determined in advance. According to the embodiment of the invention, EGR is performed while changing the EGR unit used for EGR between the high-pressure EGR unit 40 and the low-pressure EGR unit 30 or using both the high-pressure EGR unit 40 and the low-pressure EGR unit 30 in combination based on the operating state of the internal combustion engine 1.

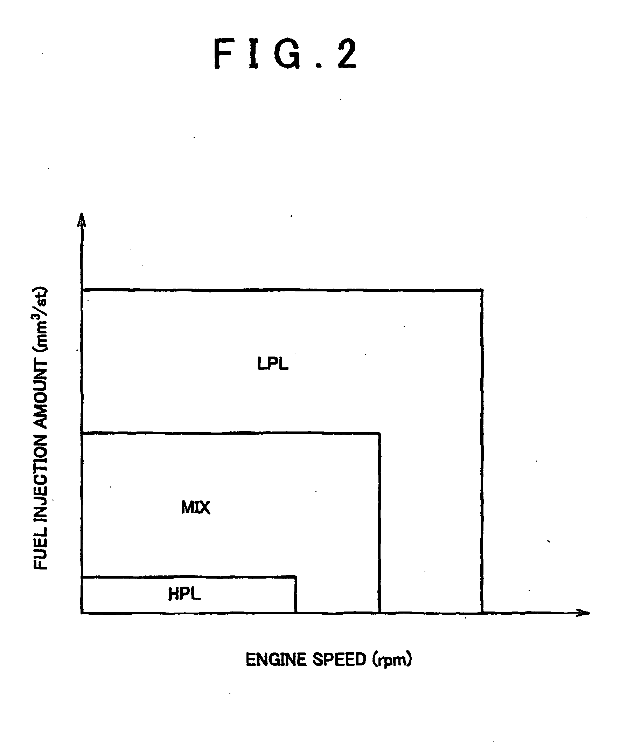

FIG. 2 is a graph showing the manner in which the EGR unit used for EGR is selected from among the high-pressure EGR unit 40 and the low-pressure EGR unit 30. The manner is set for each operating range of the internal combustion engine 1. In FIG 2, the horizontal axis of the graph represents the rotational speed of the internal combustion engine 1, and the vertical axis of the graph represents the amount of fuel injected in the internal combustion engine 1. In this case, the fuel injection amount is used as a parameter that indicates the load on the internal combustion engine 1. However, another physical quantity, for example, the accelerator pedal operation amount may be used as the parameter that indicates the load on the internal combustion engine 1.

In the range HPL in FIG 2, the internal combustion engine 1 is operating at low load and rotating at a low speed. In the range HPL, EGR is performed using the high-pressure EGR unit 40. In the range MIX in FIG. 2, the internal combustion engine 1 is operating at medium load and rotating at a medium speed. In the range MIX, the low-pressure EGR unit 30 and the high-pressure EGR unit 40 are used in combination. In the range LPL in FIG 2, the internal combustion engine 1 is operating at high load and rotating at a high speed. In the range LPL, EGR is performed using the low-pressure EGR unit 30. In the range where the internal combustion engine 1 is operating at higher load and/or rotating at a higher speed than in the range LPL, EGR is not performed.

In order to achieve the optimum EGR rate appropriate for the operating state of the internal combustion engine 1 in each of the above-described ranges, the base amount of the low-pressure EGR gas (hereinafter, referred to as the "base low-pressure EGR gas amount") and the base amount of the high-pressure EGR gas (hereinafter, referred to as the "base high-pressure EGR gas amount") are empirically determined in advance. In addition, the opening amount of the low-pressure EGR valve 32, which corresponds to the base low-pressuce EGR gas amount (hereinafter, referred to as the "base low-pressure EGR valve opening amount") and the opening amount of the high-pressure EGR valve 42, which corresponds to the base high-pressure EGR gas amount (hereinafter, referred to as the "base high-pressure EGR valve opening amount") are determined in advance, and stored in ROM of the ECU 20.

The ECU 20 reads the base low-pressure EGR valve opening amount and the base high-pressure EGR valve opening amount from the ROM based on the operating state of the internal combustion engine 1. The ECU 20 then controls the low-pressure EGR valve 32 such that the opening amount of the low-pressure EGR valve 32 matches the base low-pressure EGR valve opening amount. The ECU 20 also controls the high-pressure EGR valve 42 such that the opening amount of the high-pressure EGR valve 42 matches the base high-pressure EGR valve opening amount.

As described above, the EGR unit used for EGR is changed between the low-pressure EGR unit 30 and the high-pressure EGR unit 40, or the low-pressure EGR unit 30 and the high-pressure EGR unit 40 are used in combination based on the operating state of the internal combustion engine 1. As a result, EGR is performed in a broader operating range of the internal combustion engine 1, and therefore the amount of NOx generated is reduced.

The high-pressure EGR passage 41 is formed of a passage that provides direct communication between the intake manifold 17 and the exhaust manifold 18. Accordingly, the length of the flow channel (the high-pressure EGR channel) through which the exhaust gas discharged from the cylinders 2 is recirculated back to the cylinders 2 through the high-pressure EGR passage 41 is relatively short. In addition, only a small number of the engine components such as the high-pressure EGR valve 42 and the high-pressure EGR cooler 43 are arranged in the high-pressure EGR channel. Therefore, the temperature of the high-pressure EGR gas changes relatively quickly in response to a change in the temperature of the exhaust gas discharged from the cylinders 2.

In contrast, in the flow channel (the low-pressure EGR channel) through which the exhaust gas discharged from the cylinders 2 is recirculated back to the cylinders 2 via the low-pressure EGR passage 31, there are arranged various engine components such as the turbine housing 5b, the exhaust gas control apparatus 10, the low-pressure EGR cooler 33, the low-pressure EGR valve 32, the compressor housing 5a, and the intercooler 8. In addition, the low-pressure EGR channel is much longer than the high-pressure EGR channel. Therefore, when the temperature of the exhaust gas discharged from the cylinders 2 changes, a change in the temperature of the exhaust gas is moderated due to the heat capacities of the engine components arranged in the low-pressure EGR channel while the exhaust gas flows through the low-pressure EGR channel. Accordingly, the response of the temperature of the low-pressure EGR gas to a change in the temperature of the exhaust gas discharged from the cylinders 2 tends to be slower than that of the high-pressure EGR gas.

The following description will be made concerning the case in which the internal combustion engine 1 is in the transitional state from the no-load operating state, for example, the speed-reduction operating state in which fuel supply is cut off, or the low-load operating state included in the range HPL in FIG 2 (for example, the idling state) (hereinafter, these operating states will be collectively referred to as the "low-load state") to the operating state included in the range MIX in FIG 2 or the operating state included in the range LPL in FIG. 2 (hereinafter, these operating states will be collectively referred to as the "high-load state"). When the internal combustion engine 1 is in the low-load state, the temperatures of the internal combustion engine 1, the high-pressure EGR channel and the various engine components arranged in the low-load EGR channel are low. In such a state, if the internal combustion engine 1 is shifted to the high-load state, the fuel injection amount increases in accordance with a change in the operating state, and the temperature of the exhaust gas discharged from the cylinders 2 increases.

At this time, the temperature of the high-pressure EGR gas is increased in a relatively short time in response to a change in the temperature of the exhaust gas discharged from the cylinders 2. In contrast, the temperature of the low-pressure EGR gas is kept low for a while in the early stage of the transition of the internal combustion engine 1 from the low-load state to the high-load state. This is because the temperature of the exhaust gas, which is high when it is discharged from the cylinders 2, is decreased while the exhaust gas passes through the low-temperature turbocharger 5, exhaust gas control apparatus 10, low-pressure EGR cooler 33, low-pressure EGR valve 32, intercooler 8, etc.

When the internal combustion engine I is in the transitional state to the high-load state, if the high-pressure EGR gas amount and the low-pressure EGR gas amount are set to the base high-pressure EGR gas amount and the low-pressure EGR gas amount, respectively, which are set for the high-load state, the low-pressure EGR gas, having a temperature lower than that of the low-pressure EGR gas temperature that is estimated to be achieved when the internal combustion engine 1 is normally operating at high load (hereinafter, referred to as the "normal-time low-pressure EGR gas temperature"), is recirculated back to the cylinders 2. In this case, the intake air temperature is excessively decreased, which may cause incomplete combustion, for example, a misfire.

Therefore, according to the embodiment of the invention, when the internal combustion engine 1 is in the transitional state from the low-load state to the high-load state, the high-pressure EGR gas amount is made larger than the base high-pressure EGR gas amount that is set for the high-load state. Thus, a larger amount of high-pressure EGR gas, having a temperature increased up to the high-pressure EGR gas temperature that is estimated to be achieved when the internal combustion engine 1 is normally operating at high load (the normal-time high-pressure EGR gas temperature), is recirculated back to the cylinders 2 in a relatively short time after the internal combustion engine 1 starts shifting from the low-load state to the high-load state. This suppresses an excessive decrease in the intake air temperature. As a result, occurrence of incomplete combustion, for example, a misfire, may be suppressed.

In this case, the low-pressure EGR gas amount may be set by subtracting the amount corresponding to an increase in the high-pressure EGR gas amount from the base low-pressure EGR gas amount that is set for the high-load state. Namely, the high-pressure EGR gas amount and the low-pressure EGR gas amount may be set through correction such that the ratio of the high-pressure EGR gas amount to the entire EGR gas amount is increased while the EGR rate before an increase in the high-pressure EGR gas amount is maintained.

According to the embodiment of the invention, the combustion state of the fuel in each cylinders 2 is estimated based on the cylinder pressure detected by the cylinder pressure sensor 13. When it is estimated that incomplete combustion, for example, a misfire has actually occurred, the high-pressure EGR gas amount is increased. In this way, only after a sufficient time has elapsed since the internal combustion engine 1 starts shifting from the low-load state to the high-load state, the temperatures of the engine components arranged in the low-load EGR channel have sufficiently increased, and the low-pressure EGR gas temperatures has been increased up to the nonnal-time low-pressure EGR gas temperature, the high-pressure EGR gas amount and the low-pressure EGR gas amount are reset to the base high-pressure EGR gas amount and the base low-pressure EGR gas amount, respectively, which are set for the high-load state. As a result, EGR is performed in the optimum manner for the operating state of the internal combustion engine 1.

An example of the method for estimating the actual combustion state based on the cylinder pressure is a method in which whether a misfire has occurred or there is a sign of a misfire is determined based on whether the peak value of the time-change rate of an increase in the cylinder pressure due to the fuel combustion (referred also as the "combustion pressure") has exceeded a predetermined threshold value. Note that, not only the method for detecting the combustion state based on the cylinder pressure but also any methods may be employed as long as the actual fuel combustion state is detected.

Not only an excessive decrease in the intake air temperature but also various factors may cause the incomplete combustion in the internal combustion engine 1 (for example, a low oxygen concentration). If the incomplete combustion detected in the above-described manner is due to a factor other than an excessive decrease in the intake air temperature, there is a possibility that increasing the high-pressure EGR gas amount does not eliminate the incomplete combustion.

Therefore, according to the embodiment of the invention, when the incomplete combustion is detected, the high-pressure EGR gas amount is increased only when it is determined that the incomplete combustion is caused due to an excessive decrease in the intake air temperature. More specifically, only when the temperature of the exhaust gas control apparatus 10, which is detected by the temperature sensor 12, is lower than a predetermined reference temperature, the high-pressure EGR gas amount is increased.

The above-described correction is made for the following reason. The intake air temperature is excessively decreased when the internal combustion engine 1 is in the transitional state from the low-load state to the high-load state, because the low-pressure EGR gas temperature falls below the normal-time low-pressure EGR gas temperature, as described above. The low-pressure EGR gas is a portion of the exhaust gas flowing out of the exhaust gas control apparatus 10. Accordingly, it is considered that the temperature of the exhaust gas control apparatus 10 has a strong correlation with the low-pressure EGR gas temperature, and therefore has a strong correlation, with the intake air temperature.

The predetermined reference temperature is the temperature of the exhaust gas control apparatus 10, which is used to determine (or estimate) whether the low-pressure EGR gas temperature falls below the normal-time low-pressure EGR gas temperature. The predetermined reference temperature is empirically determined in advance.

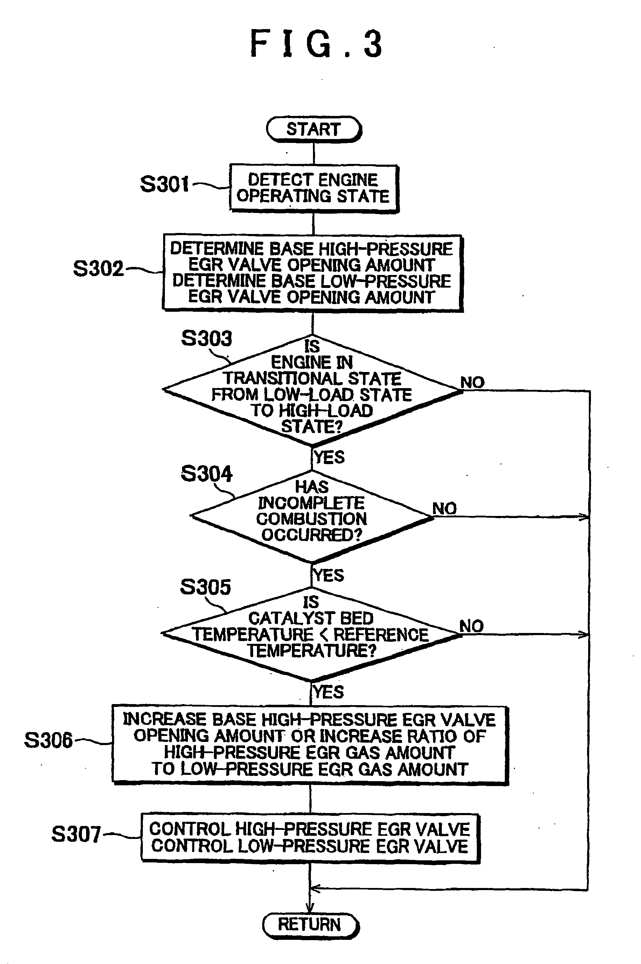

Next, the steps of the control for increasing the high-pressure EGR gas amount will be described in detail with reference to FIG. 3. FIG 3 is a flowchart showing the routine of the control for increasing the high-pressure EGR gas amount. The routine is executed by the ECU 20 at predetermined time intervals.

In step S301, the ECU 20 detects the operating state of the internal combustion engine 1. More specifically, the ECU 20 detects the load on the internal combustion engine 1 based on the detection value from the accelerator pedal operation amount sensor 15, and detects the rotational speed of the internal combustion engine 1 based on the detection value from the crank position sensor 16.

In step S302, the ECU 20 determines the base high-pressure EGR valve opening amount and the base low-pressure EGR valve opening amount appropriate for the operating state of the internal combustion engine 1 which is detected in step S301. The base high-pressure EGR valve opening amount and the base low-pressure EGR valve opening amount are empirically determined in advance and indicated by functions or maps that define the correlations between the base high-pressure EGR valve opening amount and the base low-pressure EGR valve opening amount, and the engine load and engine speed of the internal combustion engine 1.

In step S303, the ECU 20 determines whether the internal combustion engine 1 is in the transitional state from the low-load state to the high-load state. More specifically, the ECU 20 determines whether the internal combustion engine 1 is in the transitional state from the low-load state to the high-load state based on the operating state of the internal combustion engine 1, which is detected in step S301 of the current routine, and the operating state of the internal combustion engine 1, which is detected when the immediately preceding routine is executed. When an affirmative determination is made in step S303, step S304 is executed. On the other hand, when a negative determination is made in step S303, the routine ends.

In step S304, the ECU 20 determines whether incomplete combustion has occurred in the internal combustion engine 1. More specifically, the ECU 20 determines whether the time-change rate of the amount of change in the cylinder pressure due to the fuel combustion has exceeded a predetermined threshold value based on the cylinder pressure detected by the cylinder pressure sensor 13. When an affirmative determination is made in step S304, step S305 is executed. On the other hand, when a negative determination is made in step S304, the routine ends.

In step S305, the ECU 20 determines whether the incomplete combustion detected in step S304 is caused by an excessive decrease in the intake air temperature. More specifically, the ECU 20 determines whether the temperature of the exhaust gas control apparatus 10, which is detected by the temperature sensor 12, is lower than the predetermined reference temperature. When an affirmative determination is made in step S305, step S306 is executed. On the other hand, when a negative determination is made in step S305, the routine ends.

In step S306, the ECU 20 increases the high-pressure EGR gas amount. More specifically, the ECU 20 corrects the base high-pressure EGR valve opening amount determined in step S302 to a larger degree. Alternatively, the ECU 20 may correct the base high-pressure EGR valve opening amount to a larger degree and correct the base low-pressure EGR valve opening amount to a smaller degree.

In step S307, the ECU 20 controls the high-pressure EGR valve 42 and the low-pressure EGR valve 32 such that the opening amount of the high-pressure EGR valve 42 and the opening amount of the low-pressure EGR valve 32 match the base high-pressure EGR valve opening amount and the base low-pressure EGR valve opening amount which are determined through the correction in step S306.

Executing the routine described above prevents the situation in which incomplete combustion, for example, a misfire occurs because a large amount of the low-pressure EGR gas having a temperature lower than the normal-time low-pressure EGR gas temperature is recirculated back to the internal combustion engine I when the internal combustion engine 1 is in the transitional state from the low-load state to the high-load state.

While the invention has been described with reference to an example embodiment thereof, it is to be understood that the invention is not limited to the example embodiment. To the contrary, the invention is intended to cover various modifications and equivalent arrangements within the scope of the invention. For example, according to the embodiment of the invention described above, the high-pressure EGR gas amount is increased on the condition that the incomplete combustion is actually detected and the temperature of the exhaust gas control apparatus 10 is decreased when the internal combustion engine 1 is in the transitional state from the low-load state to the high-load state. However, detection of the incomplete combustion and the determination that the temperature of the exhaust gas control apparatus 10 is decreased are not the necessary conditions to increase the high-pressure EGR gas amount. The high-pressure EGR gas amount may be increased when the internal combustion engine 1 is in the transitional state.

The high-pressure EGR gas amount and the low-pressure EGR gas amount may be reset to the base high-pressure EGR gas amount and the base low-pressure EGR gas amount, respectively, when a predetermined time has elapsed since the high-pressure EGR gas amount is increased or when the temperature of the exhaust gas control apparatus 10 exceeds the predetermined temperature.

## Claims

1. An EGR system for an internal combustion engine comprising:
a turbocharger (5) that has a compressor (5a) in an intake passage (3) of the internal combustion engine, and that has a turbine (5b) in an exhaust passage (4) of the internal combustion engine;
a high-pressure EGR unit (40) that recirculates a portion of exhaust gas back to the internal combustion engine through a high-pressure EGR passage (41) that provides communication between the exhaust passage (4), at a portion upstream of the turbine (5b), and the intake passage (3), at a portion downstream of the compressor (5a);
a low-pressure EGR unit (30) that recirculates a portion of the exhaust gas back to the internal combustion engine through a low-pressure EGR passage (31) that provides communication between the exhaust passage (4), at a portion downstream of the turbine (5b), and the intake passage (3), at a portion upstream of the compressor (5a); and
an EGR control unit (20) that controls the high-pressure EGR unit and the low-pressure EGR unit such that a high-pressure EGR gas amount which is an amount of high-pressure EGR gas recirculated back to the internal combustion engine by the high-pressure EGR unit and a low-pressure EGR gas amount which is an amount of low-pressure EGR gas recirculated back to the internal combustion engine by the low-pressure EGR unit match a prescribed high-pressure EGR gas amount and a prescribed low-pressure EGR gas amount, respectively, based on an operating state of the internal combustion engine,
wherein the EGR control unit (20) increases a ratio of the high-pressure EGR gas amount to the low-pressure EGR gas amount, when the internal combustion engine is in a transitional state from a low-load operating state to a high-load operating state,
wherein the EGR control unit (20) makes the high-pressure EGR gas amount larger than the prescribed high-pressure EGR gas amount, when the internal combustion engine is in the transitional state from the low-load operating state to the high-load operating state, and **characterized by** that
the EGR control unit (20) sets the ratio of the high-pressure EGR gas amount to the lower-pressure EGR gas amount higher in the low-load operating state than in the high-load operating state.

2. The EGR system according to claim 1, wherein the EGR control unit (20) makes the low-pressure EGR gas amount smaller than the prescribed low-pressure EGR gas amount, when the internal combustion engine is in the transitional state from the low-load operating state to the high-load operating state.

3. The EGR system according to claim 1 or 2, **characterized by** further comprising:
a combustion state detection unit (13) that detects a fuel combustion state in the internal combustion engine,
wherein
the EGR control unit (20) increases the ratio of the high-pressure EGR gas amount to the low-pressure EGR gas amount, if incomplete fuel combustion is detected by the combustion state detection unit when the internal combustion engine is in the transitional state from the low-load operating state to the high-load operating state.

4. The EGR system according to claim 3, **characterized by** further comprising:
a catalyst temperature detection unit (12) that estimates or detects a temperature of an exhaust gas catalyst which is provided upstream of a portion at which the low-pressure EGR passage is connected to the exhaust passage,
wherein
the EGR control unit (20) increases the ratio of the high-pressure EGR gas amount to the low-pressure EGR gas amount, if incomplete fuel combustion is detected by the combustion state detection unit (13) and the temperature of the exhaust gas catalyst estimated or detected by the catalyst temperature detection unit is lower than a predetermined temperature, when the internal combustion engine is in the transitional state from the low-load operating state to the high-load operating state.

5. The EGR system according to claim 4, wherein the EGR control unit (20) resets the high-pressure EGR gas amount and the low-pressure EGR gas amount to the prescribed high-pressure EGR gas amount and the prescribed low-pressure EGR gas amount, respectively, when the temperature of the exhaust gas catalyst estimated or detected by the catalyst temperature detection unit exceeds the predetermined temperature.

6. The EGR system according to any one of claims 1 to 5, wherein the EGR control unit (20) resets the high-pressure EGR gas amount and the low-pressure EGR gas amount to the prescribed high-pressure EGR gas amount and the prescribed low-pressure EGR gas amount, respectively, when a predetermined time has elapsed since a control for increasing the ratio of the high-pressure EGR gas amount to the low-pressure EGR gas amount is executed.

7. A method for controlling an EGR system for an internal combustion engine, the EGR system including a turbocharger (5) that has a compressor (5a) in an intake passage (3) of the internal combustion engine, and that has a turbine (5b) in an exhaust passage (4) of the internal combustion engine comprising:
recirculating a portion of exhaust gas back to the internal combustion engine through a high-pressure EGR passage that provides communication between the exhaust passage (4), at a portion upstream of the turbine (5b), and the intake passage (3), at a portion downstream of the compressor (5a);
recirculating a portion of the exhaust gas back to the internal combustion engine through a low-pressure EGR passage (31) that provides communication between the exhaust passage (4), at a portion downstream of the turbine (5b), and the intake passage (3), at a portion upstream of the compressor (5a);
executing a control such that a high-pressure EGR gas amount which is an amount of high-pressure EGR gas recirculated back to the internal combustion engine and a low-pressure EGR gas amount which is an amount of low-pressure EGR gas recirculated back to the internal combustion engine match a prescribed high-pressure EGR gas amount and a prescribed low-pressure EGR gas amount, respectively, based on an operating state of the internal combustion engine;
increasing a ratio of the high-pressure EGR gas amount to the low-pressure EGR gas amount, when the internal combustion engine is in a transitional state from a low-load operating state to a high-load operating state;
increasing the ratio of the high-pressure EGR gas amount to the low-pressure EGR gas amount by making the high-pressure EGR gas amount larger than the prescribed high-pressure EGR gas amount, when the internal combustion engine is in the transitional state from the low-load operating state to the high-load operating state; and **characterized by**
setting the ratio of the high-pressure EGR gas amount to the low-pressure EGR gas amount higher in the low-load operating state than in the high-load operating state.

8. The method according to claim 7, wherein the ratio of the high-pressure EGR gas amount to the low-pressure EGR gas amount is increased by making the low-pressure EGR gas amount smaller than the prescribed low-pressure EGR gas amount, when the internal combustion engine is in the transitional state from the low-load operating state to the high-load operating state.

9. The method according to claim 7 or 8, **characterized by** further comprising:
detecting a fuel combustion state in the internal combustion engine,
wherein
the ratio of the high-pressure EGR gas amount to the low-pressure EGR gas amount is increased, if incomplete fuel combustion is detected when the internal combustion engine is in the transitional state from the low-load operating state to the high-load operating state.

10. The method according to claim 9, **characterized by** further comprising:
estimating or detecting a temperature of an exhaust gas catalyst which is provided upstream of a portion at which the low-pressure EGR passage is connected to the exhaust passage,
wherein
the ratio of the high-pressure EGR gas amount to the low-pressure EGR gas amount is increased, if incomplete fuel combustion is detected and the temperature of the estimated or detected exhaust gas catalyst is lower than a predetermined temperature, when the internal combustion engine is in the transitional state from the low-load operating state to the high-load operating state.

11. The method according to claim 10, wherein the high-pressure EGR gas amount and the low-pressure EGR gas amount are reset to the prescribed high-pressure EGR gas amount and the prescribed low-pressure EGR gas amount, respectively, when the estimated or detected temperature of the exhaust gas catalyst exceeds the predetermined temperature.

12. The method according to any one of claims 7 to 11, wherein the high-pressure EGR gas amount and the low-pressure EGR gas amount are reset to the prescribed high-pressure EGR gas amount and the prescribed low-pressure EGR gas amount, respectively, when a predetermined time has elapsed since a control for increasing the ratio of the high-pressure EGR gas amount to the low-pressure EGR gas amount is executed.

## Patentansprüche

1. AGR-System für eine Verbrennungskraftmaschine, umfassend:
einen Turbolader (5), der in einem Ansaugkanal (3) der Verbrennungskraftmaschine einen Verdichter (5a) und in einem Absaugkanal (4) der Verbrennungskraftmaschine eine Turbine (5b) aufweist,
eine AGR-Hochdruckeinheit (40), die einen Teil eines Abgases über einen AGR-Hochdruckkanal (41), der eine Verbindung zwischen dem Absaugkanal (4) an einem Abschnitt stromauf der Turbine (5b) und dem Ansaugkanal (3) an einem Abschnitt stromab des Verdichters (5a) herstellt, zu der Verbrennungskraftmaschine zurückführt,
eine AGR-Niederdruckeinheit (30), die einen Teil des Abgases über einen AGR-Niederdruckkanal (31), der eine Verbindung zwischen dem Absaugkanal (4) an einem Abschnitt stromab der Turbine (5b) und dem Ansaugkanal (3) an einem Abschnitt stromauf des Verdichters (5a) herstellt, zu der Verbrennungskraftmaschine zurückführt,
eine AGR-Steuereinheit (20), die die AGR-Hochdruckeinheit und die AGR-Niederdruckeinheit derart steuert, daß eine AGR-Hochdruckgasmenge, die eine von der AGR-Hochdruckeinheit zu der Verbrennungskraftmaschine zurückgeführte AGR-Hochdruckgasmenge ist, und eine AGR-Niederdruckgasmenge, die eine von der AGR-Niederdruckeinheit zu der Verbrennungskraftmaschine zurückgeführte AGR-Niederdruckgasmenge ist, jeweils einer vorgeschriebenen AGR-Hochdruckgasmenge und einer vorgeschriebenen AGR-Niederdruckgasmenge entsprechen, bezogen auf einen Betriebszustand der Verbrennungskraftmaschine,
wobei die AGR-Steuereinheit (20) ein Verhältnis der AGR-Hochdruckgasmenge zu der AGR-Niederdruckgasmenge vergrößert, wenn sich die Verbrennungskraftmaschine in einem Übergangszustand von einem Betriebszustand unter schwacher Belastung zu einem Betriebszustand unter starker Belastung befindet,
wobei die AGR-Steuereinheit (20) die AGR-Hochdruckgasmenge größer als die vorgeschriebene AGR-Hochdruckgasmenge einstellt, wenn sich die Verbrennungskraftmaschine im Übergangszustand von einem Betriebszustand unter schwacher Belastung zu einem Betriebszustand unter starker Belastung befindet, und **dadurch gekennzeichnet, daß**
die AGR-Steuereinheit (20) das Verhältnis der AGR-Hochdruckgasmenge zu der AGR-Gasmenge mit niedrigerem Druck in dem Betriebszustand unter schwacher Belastung höher als in dem Betriebszustand unter starker Belastung einstellt.

2. AGR-System nach Anspruch 1, wobei die AGR-Steuereinheit (20) die AGR-Niederdruckgasmenge kleiner als die vorgeschriebene AGR-Niederdruckgasmenge einstellt, wenn sich die Verbrennungskraftmaschine in dem Übergangszustand von dem Betriebszustand unter schwacher Belastung zu dem Betriebszustand unter starker Belastung befindet.

3. AGR-System nach Anspruch 1 oder 2, **dadurch gekennzeichnet, daß** es außerdem umfaßt:
eine Verbrennungszustand-Detektierungseinheit (13), die einen Kraftstoffverbrennungszustand in der Verbrennungskraftmaschine erfaßt,
wobei
die AGR-Steuereinheit (20) das Verhältnis der AGR-Hochdruckgasmenge zu der AGR-Niederdruckgasmenge vergrößert, falls die Verbrennungszustand-Detektierungseinheit eine unvollständige Kraftstoffverbrennung erfaßt, wenn sich die Verbrennungskraftmaschine im Übergangszustand von dem Betriebszustand unter schwacher Belastung zu dem Betriebszustand unter starker Belastung befindet.

4. AGR-System nach Anspruch 3, **dadurch gekennzeichnet, daß** es außerdem umfaßt:
eine Katalysatortemperatur-Detektierungseinheit {12}, die eine Temperatur eines Abgaskatalysators schätzt oder erfaßt, der stromauf eines Abschnitts vorgesehen ist, an dem der AGR-Niederdruckkanal mit dem Abgaskanal verbunden ist,
wobei
die AGR-Steuereinheit (20) das Verhältnis der AGR-Hochdruckgasmenge zu der AGR-Niederdruckgasmenge vergrößert, falls die Verbrennungszustand-Detektierungseinheit (13) eine unvollständige Kraftstoffverbrennung erfaßt und die von der Katalysatortemperatur-Detektierungseinheit geschätzte oder erfaßte Temperatur des Abgaskatalysators niedriger als eine vorgegebene Temperatur ist, wenn sich die Verbrennungskraftmaschine in dem Übergangszustand von dem Betriebszustand mit schwacher Belastung zu dem Betriebszustand mit starker Belastung befindet.

5. AGR-System nach Anspruch 4, wobei die AGR-Steuereinheit (20) die AGR-Hochdruckgasmenge und die AGR-Niederdruckgasmenge jeweils auf die vorgeschriebene AGR-Hochdruckgasmenge und die vorgeschriebene AGR-Niederdruckgasmenge rückstellt, wenn die von der Katalysatortemperatur-Detektierungseinheit geschätzte oder erfaßte Temperatur des Abgaskatalysators die vorgegebene Temperatur übersteigt.

6. AGR-System nach einem der Ansprüche 1 bis 5, wobei die AGR-Steuereinheit (20) nach Ablauf einer vorgegebenen Zeit die AGR-Hochdruckgasmenge und die AGR-Niederdruckgasmenge jeweils auf die vorgeschriebene AGR-Hochdruckgasmenge und die vorgeschriebene AGR-Niederdruckgasmenge rückstellt, da eine Steuerung zum Vergrößern des Verhältnisses der AGR-Hochdruckgasmenge zu der AGR-Niederdruckgasmenge ausgeführt wird.

7. Verfahren zum Steuern eines AGR-Systems für eine Verbrennungskraftmaschine, wobei das AGR-System einen Turbolader (5) umfaßt, der in einem Ansaugkanal (3) der Verbrennungskraftmaschine einen Verdichter (5a) und in einem Absaugkanal (4) der Verbrennungskraftmaschine eine Turbine (5b) aufweist, umfassend:
das Rückführen eines Teils des Abgases zu der Verbrennungskraftmaschine über einen AGR-Hochdruckkanal, der eine Verbindung zwischen dem Absaugkanal (4) an einem Abschnitt stromauf der Turbine (5b) und dem Ansaugkanal (3) an einem Abschnitt stromab des Verdichters (5a) herstellt,
das Rückführen eines Teils des Abgases zu der Verbrennungskraftmaschine über einen AGR-Niederdruckkanal (31), der eine Verbindung zwischen dem Absaugkanal (4) an einem Abschnitt stromab der Turbine (5b) und dem Ansaugkanal (3) an einem Abschnitt stromauf des Verdichters (5a) herstellt,
das Ausführen einer Steuerung derart, daß eine AGR-Hochdruckgasmenge, die eine zu der Verbrennungskraftmaschine zurückgeführte AGR-Hochdruckgasmenge ist, und eine AGR-Niederdruckgasmenge, die eine zu der Verbrennungskraftmaschine zurückgeführte AGR-Niederdruckgasmenge ist, jeweils einer vorgeschriebenen AGR-Hochdruckgasmenge und einer vorgeschriebenen AGR-Niederdruckgasmenge entsprechen, bezogen auf einen Betriebszustand der Verbrennungskraftmaschine,
das Vergrößern eines Verhältnisses der AGR-Hochdruckgasmenge zu der AGR-Niederdruckgasmenge, wenn sich die Verbrennungskraftmaschine in einem Übergangszustand von einem Betriebszustand unter schwacher Belastung zu einem Betriebszustand unter starker Belastung befindet,
das Vergrößern des Verhältnisses der AGR-Hochdruckgasmenge zu der AGR-Niederdruckgasmenge durch Einstellen der AGR-Hochdruckgasmenge auf eine größere als die vorgeschriebene AGR-Hochdruckgasmenge, wenn sich die Verbrennungskraftmaschine in dem Übergangszustand von dem Betriebszustand unter schwacher Belastung zu dem Betriebszustand unter starker Belastung befindet, und **gekennzeichnet durch**
das Einstellen des Verhältnisses der AGR-Hochdruckgasmenge zu der AGR-Niederdruckgasmenge im Betriebszustand unter schwacher Belastung auf ein größeres als im Betriebszustand unter starker Belastung.

8. Verfahren nach Anspruch 7, wobei das Verhältnis der AGR-Hochdruckgasmenge zu der AGR-Niederdruckgasmenge vergrößert wird, indem die AGR-Niederdruckgasmenge kleiner als die vorgeschriebene AGR-Niederdruckgasmenge eingestellt wird, wenn sich die Verbrennungskraftmaschine in dem Übergangszustand von dem Betriebszustand unter schwacher Belastung zu dem Betriebszustand unter starker Belastung befindet.

9. Verfahren nach Anspruch 7 oder 8, **dadurch gekennzeichnet, daß** es außerdem umfaßt:
das Erfassen eines Kraftstoffverbrennungszustands in der Verbrennungskraftmaschine,
wobei
das Verhältnis der AGR-Hochdruckgasmenge zu der AGR-Niederdruckgasmenge vergrößert wird, falls eine unvollständige Kraftstoffverbrennung erfaßt wird, wenn sich die Verbrennungskraftmaschine in dem CJbergangszustand von dem Betriebszustand unter schwacher Belastung zu dem Betriebszustand unter starker Belastung befindet.

10. Verfahren nach Anspruch 9, **dadurch gekennzeichnet, daß** es außerdem umfaßt:
das Schätzen oder Erfassen einer Temperatur eines Abgaskatalysators, der stromauf eines Abschnitts vorgesehen ist, an dem der AGR-Niederdruckkanal mit dem Absaugkanal verbunden ist,
wobei
das Verhältnis der AGR-Hochdruckgasmenge zu der AGR-Niederdruckgasmenge vergrößert wird, falls eine unvollständige Kraftstoffverbrennung erfaßt wird und die geschätzte oder erfaßte Temperatur des Abgaskatalysators niedriger als eine vorgegebene Temperatur ist, wenn sich die Verbrennungskraftmaschine in dem Übergangszustand von dem Betriebszustand unter schwacher Belastung zu dem Betriebszustand unter starker Belastung befindet.

11. Verfahren nach Anspruch 10, wobei die AGR-Hochdruckgasmenge und die AGR-Niederdruckgasmenge jeweils auf die vorgeschriebene AGR-Hochdruckgasmenge und die vorgeschriebene AGR-Niederdruckgasmenge rückgestellt werden, wenn die geschätzte oder erfaßte Temperatur des Abgaskatalysators die vorgegebene Temperatur übersteigt.

12. Verfahren nach einem der Ansprüche 7 bis 11, wobei die AGR-Hochdruckgasmenge und die AGR-Niederdruckgasmenge nach Ablauf einer vorgegebenen Zeit jeweils auf die vorgeschriebene AGR-Hochdruckgasmenge und die vorgeschriebene AGR-Niederdruckgasmenge rückgestellt werden, da eine Steuerung zum Vergrößern des Verhältnisses der AGR-Hochdruckgasmenge zu der AGR-Niederdruckgasmenge ausgeführt wird.

## Revendications

1. Système de RGE pour un moteur à combustion interne comprenant :
un turbocompresseur (5) qui comprend un compresseur (5a) dans un passage d'admission (3) du moteur à combustion interne, et qui comprend une turbine (5b) dans un passage d'échappement (4) du moteur à combustion interne ;
une unité de RGE haute pression (40) qui remet en circulation une partie des gaz d'échappement vers le moteur à combustion interne à travers un passage de RGE haute pression (41) qui fournit une communication entre le passage d'échappement (4), en une partie en amont de la turbine (5b), et le passage d'admission (3), en une partie en aval du compresseur (5a) ;
une unité de RGE basse pression (30) qui remet en circulation une partie des gaz d'échappement dans le moteur à combustion interne à travers un passage de RGE basse pression (31) qui fournit une communication entre le passage d'échappement, en une partie en aval de la turbine (5b), et le passage d'admission (3), en une partie en amont du compresseur (5a) ; et
une unité de commande de RGE (20) qui commande l'unité de RGE haute pression et l'unité de RGE basse pression de telle manière qu'une quantité de gaz qui est une quantité de gaz de RGE haute pression remise en circulation dans le moteur à combustion interne par l'unité de RGE haute pression et une quantité de gaz de RGE basse pression qui est une quantité de gaz remise en circulation dans le moteur à combustion interne par l'unité de RGE basse pression correspondent à une quantité de gaz de RGE haute pression prescrite et une quantité de gaz basse pression prescrite, respectivement, d'après un état de fonctionnement du moteur à combustion interne,
dans lequel l'unité de commande de RGE (20) augmente un rapport de la quantité de gaz de RGE haute pression sur la quantité de gaz de RGE basse pression, quand le moteur à combustion interne est dans un état transitoire d'un état de fonctionnement à faible charge à un état de fonctionnement à forte charge,
dans lequel l'unité de commande de RGE (20) rend la quantité de gaz de RGE haute pression supérieure à la quantité de gaz de RGE prescrite, quand le moteur à combustion interne est dans l'état de transition de l'état de fonctionnement à faible charge à l'état de fonctionnement à forte charge, et **caractérisé en ce que**
l'unité de commande de RGE (20) règle le rapport de la quantité de gaz de RGE haute pression sur la quantité de gaz de RGE basse pression plus grand dans l'état de fonctionnement à faible charge que dans l'état de fonctionnement à forte charge.

2. Système de RGE selon la revendication 1, dans lequel l'unité de commande de RGE (20) rend la quantité de gaz de RGE basse pression inférieure à la quantité de gaz de RGE basse pression prescrite, quand le moteur à combustion interne est dans l'état de transition de l'état de fonctionnement à faible charge à l'état de fonctionnement à forte charge.

3. Système de RGE selon la revendication 1 ou 2, **caractérisé en ce qu'**il comprend en outre :
une unité de détection d'état de combustion (13) qui détecte un état de combustion de carburant dans le moteur à combustion interne,
dans lequel
l'unité de commande de RGE (20) augmente le rapport de la quantité de gaz de RGE haute pression sur la quantité de gaz de RGE basse pression, si une combustion de carburant incomplète est détectée par l'unité de détection d'état de combustion quand le moteur à combustion interne est dans l'état de transition de l'état de fonctionnement à faible charge à l'état de fonctionnement à forte charge.

4. Système de RGE selon la revendication 3, **caractérisé en ce qu'**il comprend en outre :
une unité de détection de température de catalyseur (12) qui estime ou détecte une température d'un catalyseur de gaz d'échappement qui est fourni en amont d'une partie à laquelle le passage de RGE basse pression est relié au passage d'échappement,
dans lequel
l'unité de commande de RGE (20) augmente le rapport de la quantité de gaz de RGE haute pression sur la quantité de gaz de RGE basse pression, si une combustion incomplète du carburant est détectée par l'unité de détection d'état de combustion (13) et la température du catalyseur de gaz d'échappement estimée ou détectée par l'unité de détection de température de catalyseur est inférieure à une température prédéterminée, quand le moteur à combustion interne est dans l'état de transition de l'état de fonctionnement à faible charge à l'état de fonctionnement à forte charge.

5. Système de RGE selon la revendication 4, dans lequel l'unité de commande de RGE (20) réinitialise la quantité de gaz de RGE haute pression et la quantité de gaz de RGE basse pression à la quantité de gaz de RGE haute pression prescrite et la quantité de gaz de RGE basse pression prescrite, respectivement, quand la température du catalyseur de gaz d'échappement estimée ou détectée par l'unité de détection de température de catalyseur dépasse la température prédéterminée.

6. Système de RGE selon l'une quelconque des revendications 1 à 5, dans lequel l'unité de commande de RGE (20) réinitialise la quantité de gaz de RGE haute pression et la quantité de gaz de RGE basse pression à la quantité de gaz de RGE haute pression prescrite et la quantité de gaz de RGE basse pression prescrite, respectivement, quand un temps prédéterminé s'est écoulé depuis qu'une commande pour augmenter le rapport de la quantité de gaz de RGE haute pression sur la quantité de gaz de RGE basse pression a été exécutée.

7. Procédé de commande d'un Système de RGE pour un moteur à combustion interne, le système de RGE incluant un turbocompresseur (5) qui comprend un compresseur (5a) dans un passage d'admission (3) du moteur à combustion interne, et qui comprend une turbine (5b) dans un passage d'échappement (4) du moteur à combustion interne comprenant les étapes :
remettre en circulation une partie des gaz d'échappement vers le moteur à combustion interne à travers un passage de RGE haute pression qui fournit la communication entre le passage d'échappement (4), en une partie en amont de la turbine (5b), et le passage d'admission (3), en une partie en aval du compresseur (5a) ;
remettre en circulation une partie des gaz d'échappement dans le moteur à combustion interne à travers un passage de RGE basse pression (31) qui fournit la communication entre le passage d'échappement (4), en une partie en aval de la turbine (5b), et le passage d'admission (3), en une partie en amont du compresseur (5a) ;
exécuter une commande de telle manière qu'une quantité de gaz qui est une quantité de gaz de RGE haute pression remis en circulation dans le moteur à combustion interne par l'unité de RGE haute pression et qu'une quantité de gaz de RGE basse pression qui est une quantité de gaz remise en circulation dans le moteur à combustion interne par l'unité de RGE basse pression correspondent à une quantité de gaz de RGE haute pression prescrite et une quantité de gaz basse pression prescrite, respectivement, d'après un état de fonctionnement du moteur à combustion interne,
augmenter un rapport de la quantité de gaz de RGE haute pression sur la quantité de gaz de RGE basse pression, quand le moteur à combustion interne est dans un état transitoire d'un état de fonctionnement à faible charge à un état de fonctionnement à forte charge,
augmenter le rapport de la quantité de gaz de RGE haute pression sur la quantité de gaz de RGE basse pression en rendant la quantité de gaz de RGE haute pression supérieure à la quantité de gaz de RGE haute précision prescrite, quand le moteur à combustion interne est dans l'état de transition de l'état de fonctionnement à faible charge à l'état de fonctionnement à forte charge, et **caractérisé par**
régler le rapport de la quantité de gaz de RGE haute pression sur la quantité de gaz de RGE basse pression plus grand dans l'état de fonctionnement à faible charge que dans l'état de fonctionnement à forte charge.

8. Procédé selon la revendication 7, dans lequel le rapport de la quantité de gaz de RGE haute pression sur la quantité de gaz de RGE basse pression est augmenté en rendant la quantité de gaz de RGE basse pression inférieure à la quantité de gaz de RGE basse pression prescrite, quand le moteur à combustion interne est dans l'état de transition de l'état de fonctionnement à faible charge à l'état de fonctionnement à forte charge.

9. Procédé selon la revendication 7 ou 8, **caractérisé en ce qu'**il comprend en outre l'étape :
détecter un état de combustion de carburant dans le moteur à combustion interne,
dans lequel
le rapport de la quantité de gaz de RGE haute pression sur la quantité de gaz de RGE basse pression est augmenté, si une combustion de carburant incomplète est détectée quand le moteur à combustion interne est dans l'état de transition de l'état de fonctionnement à faible charge à l'état de fonctionnement à forte charge.

10. Procédé selon la revendication 9, **caractérisé en ce qu'**il comprend en outre :
estimer ou détecter une température d'un catalyseur de gaz d'échappement qui est placé en amont d'une partie à laquelle le passage de RGE haute pression est relié au passage d'échappement,
dans lequel
le rapport de la quantité de gaz de RGE haute pression sur la quantité de gaz de RGE basse pression est augmenté, si une combustion incomplète du carburant est détectée et la température du catalyseur de gaz d'échappement estimée ou détectée est inférieure à une température prédéterminée, quand le moteur à combustion interne est dans l'état de transition de l'état de fonctionnement à faible charge à l'état de fonctionnement à forte charge.

11. Procédé selon la revendication 10, dans lequel la quantité de gaz de RGE haute pression et la quantité de gaz de RGE basse pression sont réinitialisées à la quantité de gaz de RGE haute pression prescrite et la quantité de gaz de RGE basse pression prescrite, respectivement, quand la température du catalyseur de gaz d'échappement estimée ou détectée par l'unité de détection de température de catalyseur dépasse la température prédéterminée.

12. Procédé selon l'une quelconque des revendications 7 à 11, dans lequel la quantité de gaz de RGE haute pression et la quantité de gaz de RGE basse pression sont réinitialisées à la quantité de gaz de RGE haute pression prescrite et la quantité de gaz de RGE basse pression prescrite, respectivement, quand un temps prédéterminé s'est écoulé depuis qu'une commande pour augmenter le rapport la quantité de gaz de RGE haute pression à la quantité de gaz de RGE basse pression a été exécutée.
